# FASCICULE DE BREVET EUROPEEN

(11) **EP 0 671 798 B1**
(45) Date de publication et mention de la délivrance du brevet: **24.01.2001**
(21) Numéro de dépôt: 95400417.2
(22) Date de dépôt: 27.02.1995
(51) Int. Cl.: H02H 7/09, H02H 3/253

(54) **Dispositif électronique de protection thermique**
Elektronische Vorrichtung zum thermischen Schutz
Electronic thermal protection circuit

(30) Priorité: 07.03.1994 FR 9402698
(43) Date de publication de la demande: 13.09.1995
(73) Titulaire: Schneider Electric Industries SA, 92500 Rueil-Malmaison (FR)
(72) Inventeur: Baurand, Gilles, F-78360 Montesson la Borde (FR); Stentz, Antoine, F-92500 Rueil-Malmaison (FR)
(74) Mandataire: Saint Martin, René

(56) Documents cités:
- DE-A- 3 320 013
- FR-A- 2 117 946
- FR-A- 2 641 410
- FR-A- 2 657 732
- US-A- 4 751 653

## Description

La présente invention se rapporte à un dispositif électronique de protection thermique d'une charge comprenant des transformateurs d'intensité installés sur les fils de la ligne polyphasée alimentant ladite charge et connectés à un circuit de traitement électronique fournissant un ordre de commande apte à interrompre l'alimentation polyphasée de cette charge.

On utilise, pour protéger les moteurs électriques, des relais thermiques associés à des contacteurs ou des modules de protection thermique associés à des disjoncteurs. Ces appareils contrôlent le courant absorbé sur chacune des phases ou les déséquilibres ou absences de phase. Ils comprennent habituellement, pour chaque phase, un bilame échauffé par le courant de phase. Quand une surcharge se produit sur une phase, le bilame qui correspond à la phase surchargée fléchit et commande la coupure de l'alimentation du moteur. Le déclenchement en cas de déséquilibre ou d'absence de phase est obtenu par un dispositif différentiel. Ces relais thermiques sont difficilement utilisables pour des courants supérieurs à 100 ampères environ. L'échauffement de chaque bilame et donc le courant de déclenchement sont mal maîtrisés car des échauffements parasites se produisent.

On connaît par le brevet FR 2.657 732, un dispositif électronique de protection conforme au préambule de la revendication 1, comportant, pour chaque phase, un transformateur de courant qui délivre un signal à un circuit de traitement analogique apte à protéger contre le déséquilibre entre phases.

On connaît par le brevet US 4 751 653, un dispositif électronique comportant, pour chaque phase, un transformateur de courant qui délivre un signal à un circuit de traitement de type numérique apte à détecter l'absence de phase, les sorties des transformateurs d'intensité étant connectées à des moyens de détection qui fournissent au circuit de traitement des signaux logiques dont les niveaux dépendent du sens et de l'intensité du courant de sortie de chaque transformateur.

On connaît par le brevet français 2.641.410, un relais électronique qui est équipé d'un détecteur thermique comprenant un élément résistif chauffant parcouru par un courant de phase et thermiquement couplé à un capteur de température, au moyen d'un corps de couplage thermique. Ce détecteur thermique permet de mémoriser de façon simple l'état thermique de la charge protégée par le relais.

L'invention a notamment pour but de fournir un dispositif de protection électronique assurant le traitement des déséquilibres de phases de manière numérique, sans aucun traitement analogique. Le dispositif est insensible aux harmoniques. Il détecte les déséquilibres de courants, petits ou grands, ainsi que les absences de phases.

Le dispositif selon l'invention est caractérisé par le fait que les sorties des transformateurs d'intensité sont connectées à des moyens de détection qui fournissent au circuit de traitement électronique des signaux logiques dont les niveaux dépendent du sens et de l'intensité du courant de sortie de chaque transformateur d'intensité et que le circuit de traitement électronique traite deux par deux lesdits signaux logiques par "ou exclusif" pour obtenir des états logiques et calcule si les durées pendant lesquelles ces états logiques sont à un même niveau sont égales ou inégales.

Selon une caractéristique, le circuit de traitement électronique traite les signaux reçus et délivre, par l'intermédiaire d'un circuit de sortie, un ordre de déclenchement ou de commande à un appareil associé.

L'invention va maintenant être décrite avec plus de détail en se référant à un mode de réalisation donné à titre d'exemple et représenté par les dessins annexés sur lesquels:

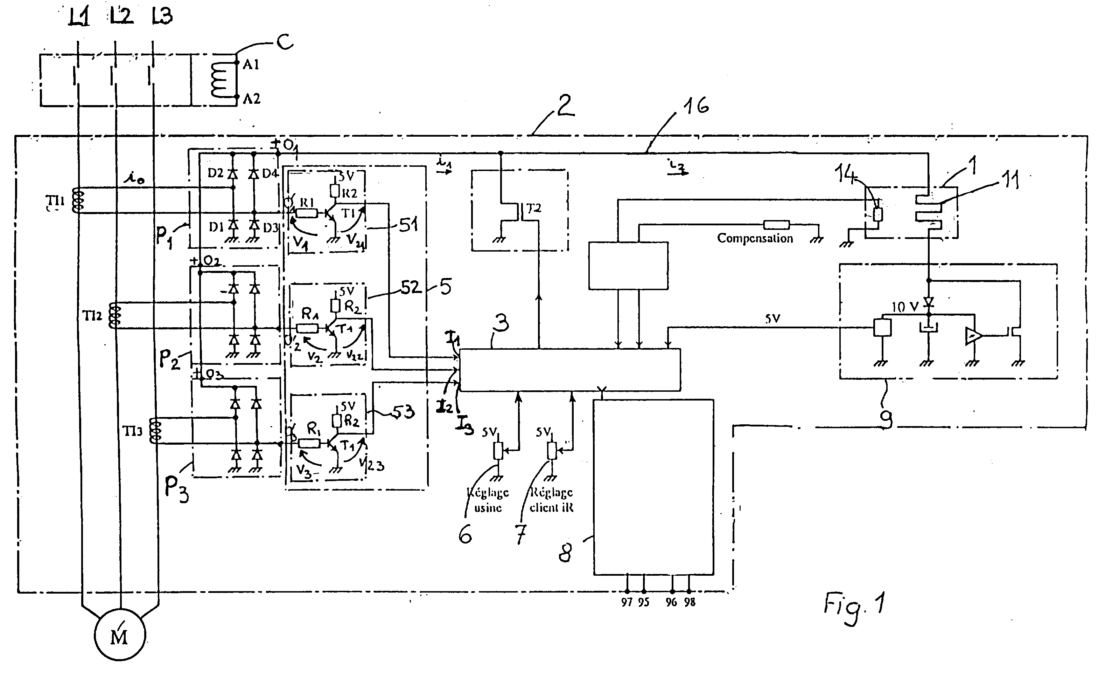

- la figure 1 est un schéma d'un dispositif électronique de protection triphasé conforme à l'invention;
- la figure 2 est un diagramme illustrant le fonctionnement du dispositif de la figure 1 en régime équilibré;
- la figure 3 est un diagramme illustrant le fonctionnement en régime déséquilibré;
- la figure 4 est un diagramme illustrant le fonctionnement lorsqu'une phase est manquante.

Le dispositif électronique selon l'invention est destiné à protéger un moteur électrique triphasé M, en cas de surcharge ou de déséquilibre entre les courants de phases.

Sur chaque fil de phase L₁ ou L₂ ou L₃ est disposé un capteur de courant Ti₁ ou Ti₂ ou Ti_{3,} respectivement, du type transformateur d'intensité. Les sorties secondaires de chaque transformateur Ti₁ ou Ti₂ ou Ti₃ alimentent un circuit de redressement P₁ ou P₂ ou P₃ respectivement qui est constitué par un pont de diodes D₁, D₂, D₃, D₄ et qui fournit un courant redressé à deux sorties O₁, O'₁ ou O₂, O'₂, ou O₃, O'₃ respectivement.

Les sorties O₁, O₂, O₃ des circuits de redressement P₁, P₂, P₃ sont reliées en commun à un élément résistif chauffant (résistance) 11 d'un détecteur thermique 1. Une première borne de la résistance 11 est donc reliée aux sorties O₁, O₂, O₃, l'autre borne de la résistance 11 étant reliée à un circuit d'alimentation 9. Cette résistance 11 est donc parcourue par le courant redressé fourni par les circuits de redressement.

Le circuit d'alimentation 9 qui est connecté à la résistance 11 fournit une tension de sortie (5V) utilisée pour l'alimentation d'un circuit de traitement électronique 3.

La résistance 11 est thermiquement couplée à un seul et même capteur de température 14 de type connu en soi. Une plaque de couplage thermique réalisée en un matériau résistant à la température et isolant électriquement sépare le capteur de température 14 et la résistance 11.

La résistance 11 est de préférence sérigraphiée sur la plaque de couplage thermique. Le capteur de température 14 peut également être sérigraphié sur la face qui est opposée à la face portant la résistance 11. En variante, le capteur 14 peut être indépendant de la plaque de couplage tout en étant en contact direct avec celle-ci.

La résistance 11, la plaque de couplage thermique et le capteur de température 14 sont logés dans un boîtier qui est électriquement isolant.

Le signal de sortie du capteur 14 est envoyé au circuit de traitement électronique 3 qui traite les signaux reçus et délivre, par l'intermédiaire d'un circuit de sortie 8, un ordre de déclenchement ou de commande à un appareil associé. Ce circuit 3 comprend un microprocesseur.

Le circuit de traitement électronique 3 reçoit sur une première entrée les informations données respectivement par un organe de réglage usine 6 et sur une seconde entrée les informations données par un organe de réglage client 7.

Le dispositif peut être associé à un contacteur ou à un disjoncteur.

Dans le cas où le dispositif est associé à un contacteur (version relais), le circuit de sortie 8 présente des sorties 95 à 98 pouvant être raccordées aux entrées A1, A2 d'un contacteur associé C qui est installé sur les lignes L₁, L₂, L₃ de manière à couper l'alimentation du moteur M.

Dans le cas où le dispositif est associé à un disjoncteur, le circuit de sortie 8 commande la serrure du disjoncteur.

Le courant de sortie des circuits de redressement P₁, P₂, P₃ est ajusté par un transistor T2 commandé en modulation de largeur d'impulsions par le circuit de traitement électronique 3.

Chaque sortie négative des circuits de redressement P₁, P₂, P₃ attaque un circuit de détection 51, 52, 53, respectivement, qui transforme le signal sinusoïdal en signal logique.

Chaque circuit de détection 51 comprend une résistance R1 reliée à la sortie d'un circuit de redressement et un transistor T1 de type NPN dont le collecteur reçoit une tension d'alimentation au travers d'une résistance R2 et dont l'émetteur est relié à la masse. Les circuits de détection 51, 52, 53 sont tous identiques et fonctionnent tous de la manière qui vient d'être décrite. Ils constituent ensemble le circuit de traitement des déséquilibres repéré 5.

Le fonctionnement du dispositif va maintenant être expliqué.

Les courants secondaires des transformateurs d'intensité Ti₁, Ti₂, Ti₃ sont redressés et additionnés pour former un courant i₁ qui est envoyé sur la résistance 11. La résistance 11 du détecteur thermique 1 est donc parcourue par un courant redressé qui représente la somme des courants redressés.

En fonction du courant de réglage client déterminé par l'organe de réglage 7, le circuit de traitement électronique 3 commande le transistor T₂ en modulation de largueur d'impulsions (MLI) de façon que la puissance dissipée dans le détecteur thermique 1 soit sensiblement constante. Quel que soit le courant de réglage, le détecteur thermique 1 travaille avec la même puissance. Les échauffements sont réduits lorsque iR = iR max. La technologie du détecteur thermique est plus économique. Il y a un seul réglage à chaud.

Si l'on se réfère aux circuits de détection, la tension base-émetteur aux bornes du transistor T₁ est repérée respectivement V₁ pour le circuit 51, V₂ pour le circuit 52, V₃ pour le circuit 53. La tension collecteur-émetteur aux bornes du transistor T₁ est repérée respectivement V₂₁ pour le circuit 51, V₂₂ pour le circuit 52, V₂₃ pour le circuit 53.

Lorsque le courant i₀ au secondaire d'un transformateur d'intensité Ti est positif, les diodes D₁ et D₄ conduisent. Quel que soit l'état des transistors T₂ et T₃, la tension base-émetteur V1 est de l'ordre de 0,6 volt. Le transistor T1 conduit et la tension collecteur₋émetteur V₂₁ est nulle (0 volt).

Lorsque le courant i₀ au secondaire du transformateur d'intensité Ti est négatif ou nul, les diodes D₂ et D₃ conduisent. Quel que soit l'état des transistors T₂ et T₃, la tension base-émetteur V1 est égale à -0,6 volt. Le transistor T1 ne conduit pas et la tension collecteur-émetteur V₂₁ est égale à la tension nominale d'alimentation (5 volts) du transistor T1.

Les tensions de sortie V₂₁, V₂₂, V₂₃ (tensions émetteur-collecteur) sont des signaux logiques ( soit 0 volt soit 5 volts). Ces signaux V₂₁, V₂₂, V₂₃ qui correspondent respectivement aux trois phases, sont appliqués aux trois entrées I₁, I_{2,} I₃ du circuit de traitement électronique 3.

Le circuit de traitement électronique 3 traite les signaux logiques V₂₁, V₂₂, V₂₃ pour obtenir par un "ou exclusif" des états logiques E₁, E₂, E₃ définis de la manière ci-après:
- E₁=1 lorsque V₂₁ et V₂₂ sont égaux ou E₁=0 s'ils ne sont pas égaux;
- E₂=1 lorsque V₂₂ et V₂₃ sont égaux ou E₂=0 s'ils ne sont pas égaux;
- E₃=1 lorsque V₂₁ et V₂₃ sont égaux ou E₃=0 s'ils ne sont pas égaux.

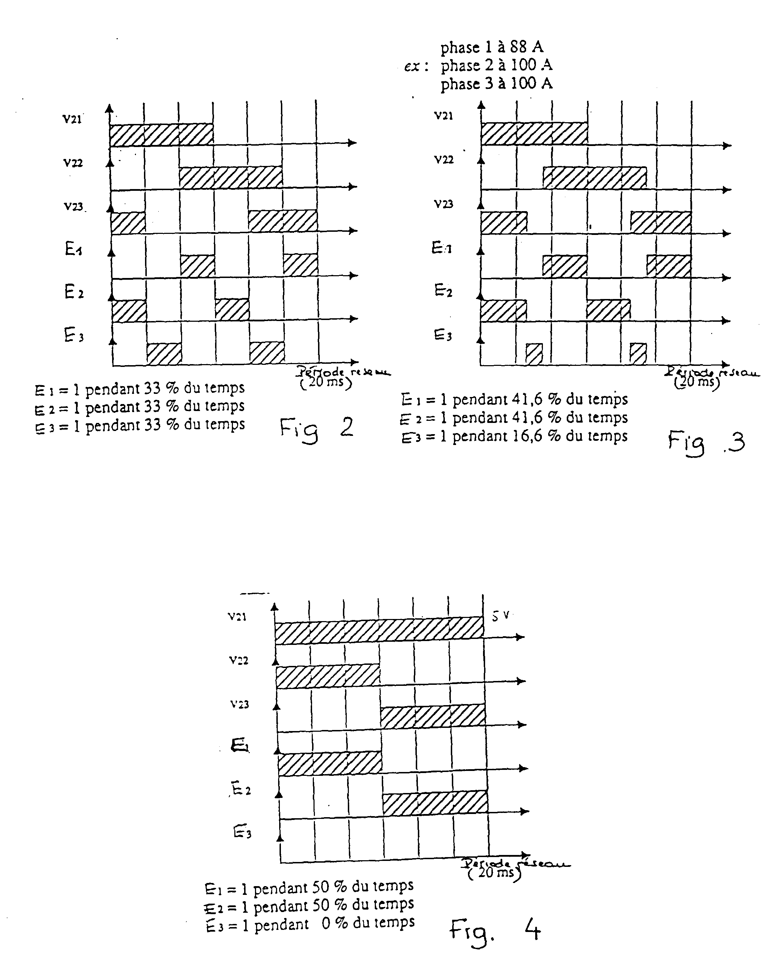

Si les durées pendant lesquelles E₁, E₂, E₃ sont égaux à 1 sont égales pendant une période réseau, alors le fonctionnement est équilibré (figure 2).

Si les durées pendant lesquelles E₁, E₂, E₃ sont égaux à 1 ne sont pas égales pendant une période réseau, alors le fonctionnement est déséquilibré (figure 3). Il est alors possible de connaître les taux de déséquilibre des courants primaires.

Si l'une des phases est totalement coupée, l'un des états E₁, E₂, E₃ est nul pendant la période de temps considérée. Si par exemple, la phase 1 est coupée, V₂₁ = 5 volts en permanence de sorte que E3=0 (figure 4).

La détermination des états E₁, E₂, E₃ est effectuée par le circuit de traitement 3. Le calcul est effectué pendant un temps suffisamment long par rapport à la période réseau.

Le déclenchement est commandé lorsque le signal de sortie du capteur 14 dépasse, en régime équilibré, un seuil de déclenchement appelé Sₛᵤₚ.

En régime déséquilibré, le seuil de déclenchement est corrigé d'un coefficient K inférieur à 1, ce nouveau seuil étant appelé S_{inf}.

La vitesse avec laquelle le seuil sera ramené de Sₛᵤₚ à S_{inf} se fera en accord avec la constante du détecteur thermique 1.

Si le déséquilibre disparaît, le seuil sera progressivement ramené de S_{inf} à Sₛᵤₚ.

Si le déséquilibre est important, le circuit de traitement électronique 3 donnera un ordre de déclenchement indépendamment du détecteur thermique 1, après une temporisation fixe.

Le dispositif traite les petits déséquilibres "thermiquement", de manière analogue au différentiel des relais à bilame. Il traite les grands déséquilibres sur les absences de phases (fonctionnements dangereux) par un temps fixe.

Il est bien entendu que l'on peut, sans sortir du cadre de l'invention qui est défini par les revendications annexées, imaginer des variantes et des perfectionnements de détail et de même envisager l'emploi de moyens équivalents.

## Revendications

1. Dispositif de protection électronique destiné à assurer la protection thermique d'une charge (M) en interrompant l'alimentation polyphasée de cette charge, comprenant des transformateurs d'intensité (Ti₁, Ti₂, Ti₃) installés sur les fils de la ligne polyphasée (L₁, L₂, L₃) alimentant ladite charge et connectés à un circuit de traitement électronique (3) apte à fournir un ordre de commande, caractérisé par le fait que les sorties des transformateurs d'intensité (Ti₁, Ti₂, Ti₃) sont connectées à des moyens de détection (51, 52, 53) qui fournissent au circuit de traitement électronique (3) des signaux logiques dont les niveaux dépendent du sens et de l'intensité du courant de sortie de chaque transformateur d'intensité et que le circuit de traitement électronique (3) traite deux par deux lesdits signaux logiques par "ou exclusif" pour obtenir des états logiques et calcule si les durées pendant lesquelles ces états logiques sont à un même niveau sont égales ou inégales.

2. Dispositif selon la revendication 1, caractérisé par le fait le circuit de traitement électronique (3) traite les signaux reçus et délivre, par l'intermédiaire d'un circuit de sortie (8), un ordre de déclenchement ou de commande à un appareil associé.

3. Dispositif selon l'une quelconque des revendications précédentes, caractérisé par le fait les moyens de détection (51, 52, 53) sont constitués par des circuits de détection (51, 52, 53) à transistors (T1) montés chacun de manière que la base soit reliée à une sortie secondaire d'un circuit de redressement et que le collecteur soit relié à une entrée du circuit de traitement (3).

4. Dispositif selon l'une quelconque des revendications précédentes, caractérisé par le fait que le circuit de traitement électronique (3) comprend un microprocesseur pour traiter de manière numérique les signaux logiques fournis par les circuits de détection.

5. Dispositif selon l'une quelconque des revendications précédentes, caractérisé par le fait que les transformateurs d'intensité (Ti₁, Ti_{2,} Ti₃) sont connectés aux circuits de détection (51, 52, 53) par l'intermédiaire des circuits de redressement (P₁, P₂, P₃).

6. Dispositif selon l'une quelconque des revendications précédentes, caractérisé par le fait que les circuits de redressement (P₁, P₂, P₃) alimentent une résistance (13) d'un détecteur thermique (1), la dite résistance étant thermiquement couplée à un capteur de température (14) qui est connecté au circuit de traitement électronique (3).

## Patentansprüche

1. Elektronische Schutzvorrichtung, um den thermischen Schutz einer Last (M) durch Unterbrechung der mehrphasigen Versorgung dieser Last zu gewährleisten, mit auf den Drähten der mehrphasigen, die besagte Last versorgenden Leitung (L₁, L₂, L₃) und an einem elektronischen Verarbeitungskreis (3), der einen Steuerbefehl liefern kann, installierten Stromtransformatoren (Ti₁, Ti₂, Ti₃), dadurch gekennzeichnet, dass die Ausgänge der Stromtransformatoren (T₁, T₂, T₃) an Detektionsmittel (51, 52, 53) angeschlossen sind, die dem elektronischen Verarbeitungskreis (3) logische Signale liefern, deren Werte von der Richtung und der Stärke des Ausgangsstroms eines jeden Stromtransformators abhängig sind, und dass der elektronische Verarbeitungskreis (3) die besagten logischen Signale "oder exklusiv" verarbeitet, um diese logischen Zustände zu erhalten, und errechnet, ob die Dauern, während der diese logischen Zustände die gleichen Werte haben, gleich oder ungleich sind.

2. Vorrichtung nach Anspruch 1, dadurch gekennzeichnet, dass der elektronische Verarbeitungskreis (3) die empfangenen Signale verarbeitet und über einen Ausgangskreis (8) einen Auslöse- oder Steuerbefehl an ein zugeordnetes Gerät sendet.

3. Vorrichtung nach einem der vorstehend genannten Ansprüche, dadurch gekennzeichnet, dass die Detektionsmittel (51, 52, 53) aus Detektionskreisen (51, 52, 53) mit Transistoren (T1) bestehen, die jeweils so montiert sind, dass die Basis mit einem Sekundärausgang eines Gleichrichterkreises verbunden ist, und dass der Kollektor mit einem Eingang des Verarbeitungskreises (3) verbunden ist.

4. Vorrichtung nach einem der vorstehend genannten Ansprüche, dadurch gekennzeichnet, dass der elektronische Verarbeitungskreis (3) einen Mikroprozessor umfasst, um die von den Detektionskreisen gelieferten logischen Signale digital zu verarbeiten.

5. Vorrichtung nach einem der vorstehend genannten Ansprüche, dadurch gekennzeichnet, dass die Stromtransformatoren (Ti₁, Ti₂, Ti₃) über Gleichrichterkreise (P₁, P₂, P₃) an die Detektionskreise (51, 52, 53) angeschlossen sind.

6. Vorrichtung nach einem der vorstehend genannten Ansprüche, dadurch gekennzeichnet, dass die Gleichrichterkreise (P₁, P₂, P₃) einen Widerstand (13) eines Thermodetektors (1) anspeisen, wobei der besagte Widerstand thermisch an einem am elektronischen Verarbeitungskreis (3) angeschlossenen Temperatursensor (14) angekoppelt ist.

## Claims

1. Electronic device for thermal protection of a load (M) by cutting off the polyphase power supply to said load, including current transformers (Ti₁, Ti_{2,} Ti₃) installed on the wires of the polyphase line (L₁, L₂, L₃) supplying power to said load and connected to an electronic processor circuit (3) adapted to generate a command, characterized in that the outputs of the current transformers (Ti₁, Ti_{2,} Ti₃) are connected to detector means (51, 52, 53) which supply to the processor circuit (3) logic signals the levels of which depend on the direction or the magnitude of the output current of each current transformer.

2. Device according to claim 1 characterized in that the electronic processor circuit (3) processes the signals received and has an output circuit (8) generating a tripping or other command to an associated device.

3. Device according to claim 1 or claim 2 characterized in that the electronic processor circuit (3) processes logic signals to combine logic states by means of an "exclusive-OR" operator and to calculate if the times for which said logic states are at the same level are equal or unequal.

4. Device according to any one of the preceding claims characterized in that the detector means (51, 52, 53) comprise detector circuits (51, 52, 53) including transistors (T1) each having its base connected to a secondary output of a rectifier circuit and its collector connected to an input of the processor circuit (3) .

5. Device according to any one of the preceding claims characterized in that the electronic processor circuit (3) includes means for treating the logic signals generated by the detector circuits.

6. Device according to any one of the preceding claims characterized in that the current transformers (Ti₁, Ti_{2,} Ti₃) are connected to the detector circuits (51, 52, 53) by rectifier circuits (P₁, P₂, P₃).

7. Device according to any one of the preceding claims characterized in that the rectifier circuits (P₁, P₂, P₃) feed a resistor (13) of a heat detector (1), said resistor being thermally coupled to a temperature sensor (14) which is connected to the electronic processor circuit (3).
